# EUROPEAN PATENT APPLICATION

(11) **EP 1 762 965 A1**
(43) Date of publication of application: **14.03.2007**
(21) Application number: 05108219.6
(22) Date of filing: 07.09.2005
(51) Int. Cl.: G06Q 10/00

(54) **Method and system for determining a packaging specification**

(71) Applicant: SAP AG, 69190 Walldorf (DE)
(72) Inventor: Huber-Buschbeck, Andreas, 69253, Heiligkreuzsteinach (DE); von Helmolt, Hans-Ulrich, 69126, Heidelberg (DE); Schweitzer, Michael, 69181, Leimen (DE)
(74) Representative: Schneider, Günther Martin

(57) **Abstract**

A computer-implemented method and system for packing products according to a packaging specification, whereby a packaging specification is defined by a plurality of packaging parameters; the method comprising a first step of selecting, based on a plurality of access sequences, at least one packaging specification out of a plurality of packaging specifications; and a second step of determining a resulting packaging specification out of the selected packaging specifications.

## Description

### BACKGROUND OF THE INVENTION

The present invention relates generally to methods and systems for managing inventory within one or more e-business systems. Such an e-business system may comprise procurement systems, sales information systems, purchasing systems, logistic information systems and/or supply chain management systems. More particularly, the present invention relates to methods and systems for optimizing the packaging process within a supply chain management system, using a packaging specification out of a plurality of packaging specifications which are stored with the supply chain management system.

Today, the success of a business company depends essentially on the requirement that customer demands on goods and/or services be fulfilled precisely, cost-efficiently and in time. Therefore, many companies make use of a supply chain management system to control and optimize their production and delivery processes.

Supply chain management may comprise the process of coordinating the flow of goods, services, information and/or finances between the involved parties such as manufactures, suppliers, wholesalers, retailers, and consumers. This process may include, among others, order processing, information feedback, and timely delivering the ordered goods and/or services.

### STATE OF THE ART

In current supply chain management systems, packaging specifications are used to define in which package sizes a required number of products has to be packed together in order to guaranty that the quantity of products to be transported and delivered is only a multiple of given packages. These packaging specifications are product dependent. No further flexibility with respect to the rounding of a required number of products is given.

### SUMMARY OF THE INVENTION

In general, in one aspect, this invention provides a computer-implemented method for packing products according to a packaging specification; the method comprising
a first step of selecting, based on a plurality of access sequences, at least one packaging specification out of a plurality of packaging specifications, and a second step of performing, according to the plurality of access sequences, a determination of a resulting packaging specification out of the selected at least one packaging specification.

A packaging specification comprises a plurality of data items which define at least one rounding rule.

The data items, or packaging parameters, of each of the at least one packaging specification comprise a part of a common packaging specification. For example, a first packaging specification comprises the packaging parameters for package units und package sizes and a second packaging specification comprises the packaging parameters for tolerances and rounding rules. The resulting packaging specification, which is a combination of these two packaging specifications, therefore comprises the packaging parameters for package units, package sizes, tolerances and rounding rules. One advantage is that several parts of a resulting packaging specification may be independently defined and maintained.

Further embodiments of the invention can comprise the following features.

The second step may further comprise a step of copying the data items of the at least one packaging specification into the resulting packaging specification according to a set of predetermined rules for copying.

Depending on the sequence, which is given by the access sequences, and a set of rules for copying, different resulting packaging specifications may be calculated out of the at least one packaging specification.

An access sequence comprises a plurality characteristic values.

Further, in one embodiment, the first step may comprise
a first sub-step of selecting, based on the plurality of characteristic values, a packaging specification out of the plurality of packaging specifications,
a second sub-step of selecting, based on a part of the plurality of characteristic values, a packaging specification out of the plurality of packaging specifications, if the first sub-step fails, and
a third sub-step of performing the second sub-step, based on a plurality of characteristic values out of the part of the second sub-step, if the second sub-step fails.

The first step may be repeated for further pluralities of characteristic values until no plurality of characteristic values is no longer available.

In this embodiment, if a packaging specification is not found according to a given plurality of characteristic values, the method performs several steps of reducing the plurality of characteristic values, whereby the reduced plurality of characteristic values, which is a part of the plurality of characteristic values, is used for further steps of selecting at least one packaging specification out of a plurality of packaging specifications. Thereby, a packaging specification may be found even if no packaging specification for the given plurality of characteristic values is maintained.

Furthermore, the step of copying data items may comprise
copying valid data items from a first selected packaging specification into the resulting packaging specification,
copying valid data items from further selected packaging specifications into the resulting packaging specification according to a set of predetermined rules for copying.

In one embodiment of the invention, the predetermined rules for copying comprises at least one of the following rules:
copying a data item from a packaging specification into the resulting packaging specification, if the corresponding data item in the resulting packaging specification is empty or
copying a data item from a packaging specification into the resulting packaging specification if the corresponding data item in the resulting packaging
specification is not empty.

Thus, the inventive method provides at least two principles for copying the data items into a resulting packaging specification: copying according to the FIFO-principle an copying according to the LIFO-principle. If the first packaging specification has a higher priority then the subsequent packaging specification, the FIFO-principle may be used for copying the data items into the resulting packaging specification.

Furthermore, this invention provides an apparatus comprising:
a data storage device which stores a plurality of packaging specifications,
means for selecting, based on a plurality of access sequences, at least one packaging specification out of the plurality of packaging specifications, and
means for determining, according to the plurality of access sequences, a resulting packaging specification out of the selected packaging specifications.

In one embodiment, the means for selecting at least one packaging specification out of a plurality of packaging specifications comprises at least
determining a packaging specification, based on a plurality of characteristic values, out of the plurality of packaging specifications; and
determining a packaging specification, based on a part of the plurality of characteristic values, out of the plurality of packaging specifications.

Furthermore, the means for determining one valid packaging specification out of the at least one packaging specification comprises at least
copying valid data items from a first packaging specification into a resulting packaging specification; and
copying valid data items from further packaging specifications into the resulting packaging specification according to a set of predetermined rules for copying.

Furthermore, the invention comprises a computer-readable storage medium comprising program code for performing the inventive methods, when loaded into a computer-system.

### BRIEF DESCRIPTION OF DRAWINGS

The accompanying drawings, which constitute a part of this disclosure, illustrate various embodiments and aspects of the present invention and, together with the description, explain the principles of the invention.

In the drawings:
- Fig. 1: illustrates the inventive method embedded in a supply chain management system;
- Fig. 2: illustrates two packaging specifications out of a plurality of packaging specifications;
- Fig. 3a: illustrates a first overlapping rule;
- Fig. 3b: illustrates second overlapping rule;
- Fig.4: illustrates a more detailed embodiment of the inventive method shown in Fig. 1; and
- Fig. 5a, 5b: illustrates in a exemplary way the determination of the packaging specification.

### DETAILED DESCRIPTION

In a supply chain management system, rounding with availability check confirms multiples of package sizes in order to guaranty that the delivered quantity of products is always a multiple of packages. Using only multiples of packages, the packaging and the transportation may be better optimized. The rounding process is performed according to one ore more rounding rules. Such rounding rules are stored in a plurality of packaging specifications. The rounding process determines a valid packaging specification out of the plurality of packaging specifications whereby such a valid packaging specification can be a combination of one or more packaging specifications. Therefore, a packaging specification provides all relevant data for rounding and packaging and defines whether and how such a rounding process has to be done. In one embodiment rounding relevant data is:
- package unit
- package size
- tolerance values and
- rounding rules.

The package units define the units for packages, e.g. carton or pallet. The package size defines the number of pieces which are packed into a package with respect to a package unit e.g. one carton contains ten pieces or one pallet contains hundred pieces. The tolerance values define an interval around the package size of a package unit. If the ordered quantity of products is within such an interval, the rounding process rounds the ordered quantity of products to the package size of the corresponding package unit. For example, if the package unit is one pallet containing 100 pieces and the tolerance interval for this package unit is [90 pieces; 110 pieces], then the rounding process rounds the ordered quantity of products to 100 pieces if the ordered quantity of products is within 90 pieces and 110 pieces.

A rounding rule defines how the rounding has to be performed by the rounding process. Three rounding rules are defined in this embodiment: rounding up, rounding down and rounding to the nearest. 'Rounding up' means to round up the ordered quantity of products to the next larger multiple of the smallest package size, 'rounding down' means to round down the ordered quantity of products to the next smaller multiple of the smallest package size and 'rounding to the nearest' means to round the ordered quantity of products to the nearest multiple of the smallest package size. For example, the smallest package size is 10 pieces. There, a number of 38 pieces is rounded as follows:
rounding down → 30 pieces (30 is the next smaller multiple of 10)
rounding up → 40 pieces (40 is the next larger multiple of 10)
rounding to the nearest → 40 pieces (40 is the nearest multiple of 10)

**Table 1 - an exemplary packaging specification**

| package unit | package size | tolerance value | rounding rule |
|---|---|---|---|
| 1 package | 2 pieces | | up |
| 1 carton | 5 packages = 10 pieces | ± 20 % (± 2 pieces) | |
| 1 pallet | 10 cartons = 100 pieces | ± 10 % (± 10 pieces) | |

One package contains 2 pieces. For this package unit tolerance values are not allowed. The package unit 'package' is the smallest package unit.

One carton contains 5 packages whereby each package contains 2 pieces. The tolerance values for this package unit are defined as ± 20 % (± 2 pieces). The resulting tolerance interval for the package unit 'one carton' is [8 pieces; 12 pieces].

One pallet contains 10 cartons whereby each carton contains 5 packages. The tolerance values for the package unit 'pallet' are defined as ± 10% (± 10 pieces). The resulting tolerance interval for the package unit 'pallet' is [90 pieces; 110 pieces].

For the package units 'carton' and 'pallet' rounding rules are not allowed.

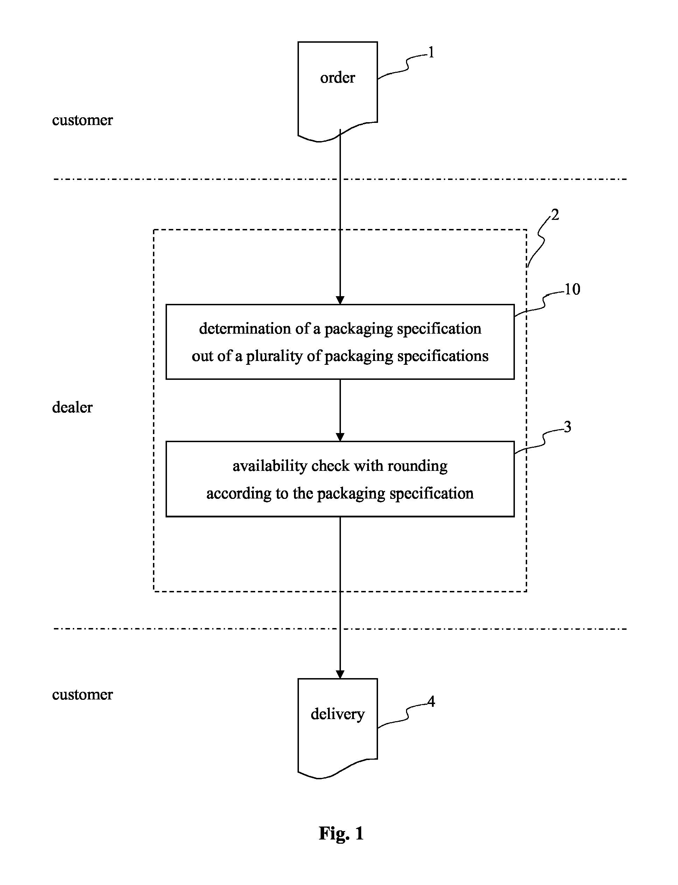

Fig. 1 shows an embodiment of an order process. In this embodiment, a customer places an order 1 of a predetermined quantity of products with the dealer. The order 1 may be in the form of an electronic order transmitted by email or a traditional order transmitted by mail. The order 1 comprises at least information about the ordered product and quantity. The dealer feeds the data about the order 1 into a supply chain management system 2 which processes this order 1. In other embodiments the dealer may be a manufacturer, a supplier or a further customer.

During processing the customer order 1, the supply chain management system 2 performs a process 10 of determining a packaging specification out of a plurality of packaging specifications, whereby the determined packaging specification may be a combination of one or more packaging specifications.

After the determination process 10, the supply chain management system 2 continues with an availability check 3. In the availability check 3 it is verified whether the ordered quantity of products is available within the dealer's stock. If required, the availability check 3 rounds the ordered quantity of products to a multiple of the smallest package size according to the determined packaging specification, whereby the rounding is performed twice, once before and once after the availability check.

If the rounded quantity of products is available, the supply chain management system 2 triggers a delivery process 4, which delivers the rounded quantity of products to the customer.

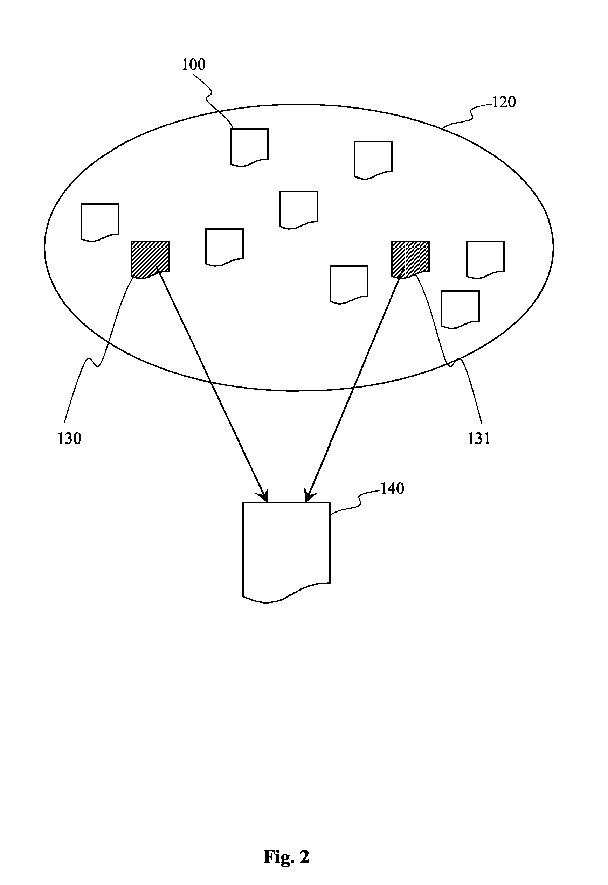

Fig. 2 shows in an exemplary way packaging specifications 100, 130, 131. The packaging specifications are stored within the supply chain management system. The packaging specifications 130, 131 are defined by a predetermined number of characteristic values, respectively characteristic values may be customer type, order type, product or product location. For example, the first packaging specification 130 is defined by a characteristic combination of 'customer type / order type' having the parameter values 'middleman / emergency order' and the second packaging specification 131 is defined by a characteristic combination of 'product / product location' having the parameter values 'screw / Germany'.

The inventive method determines the packaging specifications 130 and 131 out of the plurality of packaging specifications 120 using the access sequences 'customer type / order type' and 'product / product location'. An access sequence comprises a plurality of characteristic values.

These two packaging specifications 130 and 131 are combined to a resulting packaging specification 140. Therefore the resulting packaging specification 140 is a combination of the packaging specification 130 and the packaging specification 131. A predetermined sequence and a set of rules define how the calculation of the combination of the packaging specifications 130 and 131 has to be done. The sequence, in which the combination of the packaging specification has to be done, is given by the access sequences.

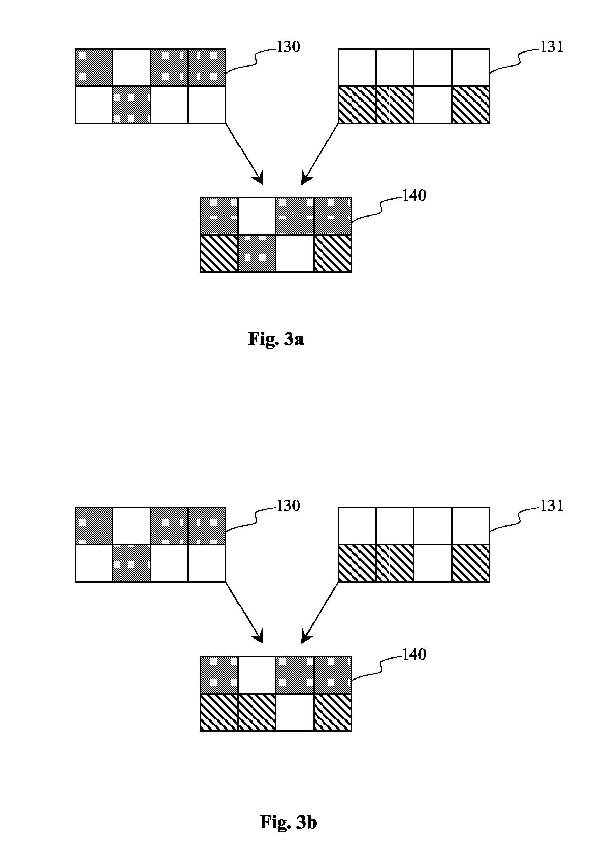

Figures 3a and 3b show two different rules for calculating a resulting packaging specification 140. The packaging specifications 130 and 131 comprise in each case eight items (shown as squares). An item is a representative for a packaging specification parameter.

Fig. 3a shows the determination of the resulting packaging specification 140 from the packaging specification 130 and 131 according to the first-in, first-out principle (FIFO). In a first step the relevant items (shown as gray squares) of packaging specification 130 are copied into the resulting packaging specification 140. In a second step, the relevant items (shown as hatched squares) of packaging specification 131 are copied into the resulting packaging specification 140, if the corresponding item in the resulting packaging specification 140 is empty.

Fig. 3b shows the determination of the resulting packaging specification 140 from the packaging specification 130 and 131 according to the last-in, first-out principle (LIFO). A first step is executed as described above in Fig. 3a. In a second step, the relevant items (shown as hatched squares) of packaging specification 131 are copied into the resulting packaging specification 140, even if the corresponding item in the resulting packaging specification 140 is not empty.

Further rules for copying items into a resulting packaging specification may be defined, e.g. using priorities for each item whereby the priorities of corresponding items are compared with each other.

The following example demonstrates with two packaging specifications, shown in table 2, the calculation of a resulting packaging specification. The first packaging specification provides data about the tolerance values, and the second packaging specification provides data about package units. Rounding rules are not maintained in this and in the following examples.

**Table 2 - two packaging specifications**

| first packaging specification | | | second packaging specification | |
|---|---|---|---|---|
| package units | tolerances | | package units | tolerances |
| | | | 1 package = 10 pieces | |
| | ± 10 % | | 1 carton = 100 pieces | |
| | ± 5 % | | 1 pallet = 1000 pieces | |

These two packaging specifications are combined to a resulting packaging specification using the FIFO principle as mentioned above. This leads to a resulting packaging specification as shown in table 3.

**Table 3 - a resulting packaging specification**

| package units | tolerances |
|---|---|
| 1 package = 10 pieces | |
| 1 carton = 100 pieces | ± 10 % |
| 1 pallet = 1000 pieces | ± 5 % |

Using the above mentioned LIFO principle with this example, this leads to the same resulting packaging specification as shown in Table 3, because the corresponding items in the resulting packaging specification are empty, while executing the second step of copying items from the second packaging specification into the resulting packaging specification.

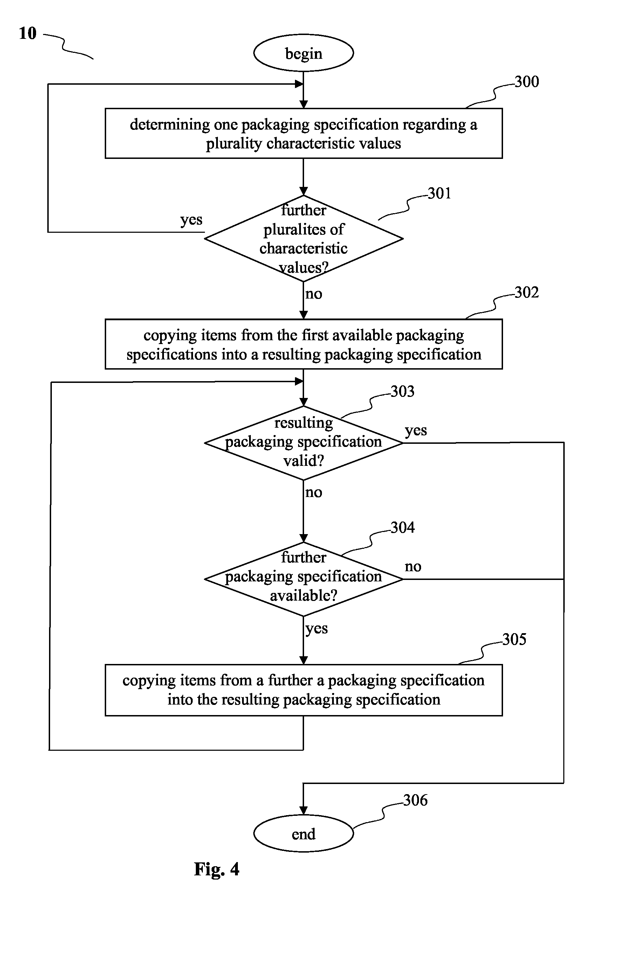

Fig. 4 shows a more detailed program flow of the determination step 10 as shown in Fig. 1. The method begins with step 300. In this step 300 a packaging specification is determined according to a plurality of access sequences, whereby each access sequence comprises a plurality of characteristic values. The step 300 has to be repeated until no further access sequence is available any more. Whether a further access sequence is available or not is checked within step 301. In one embodiment, for example, a first access sequence may be 'customer type / order type' having the parameter values 'middleman / emergency order' and a second access sequence may be 'product / product location' having the parameter values 'screw / Germany'. In this embodiment the step 300 has to be performed twice - once for each access sequences.

The result of the steps 300 and 301 comprises at least one packaging specification. The next step 302 begins with copying the items, which are not empty, from the first packaging specification into a resulting packaging specification. The first packaging specification, in this embodiment, is the first available packaging specification out of the at least one packaging specification determined in step 300. In other embodiments the at least one packaging specification may be sorted according to several sort keys. One possible sort key may be the priority of the packaging specifications, if priorities are stored together with the packaging specification. The order of the packaging specifications has an impact on the resulting packaging specification.

The following example illustrates the importance of the order of the packaging specifications.

**Table 4**

| first packaging specification | | | second packaging specification | |
|---|---|---|---|---|
| package units | tolerances | | package units | tolerances |
| 1 package = 5 pieces | | | 1 package =10 pieces | |
| | ± 10 % | | 1 carton =100 pieces | |
| | ± 5 % | | 1 pallet = 1000 pieces | ± 10 % |

Using the FIFO principle and copying in a first step the items of the first packaging specification and in a second step the items of the second packaging specification into the resulting packaging specification leads to a result as shown in table 5.

**Table 5**

| resulting packaging specification | |
|---|---|
| package units | tolerances |
| 1 package = 5 pieces | |
| 1 carton = 100 pieces | ± 10 % |
| 1 pallet = 1000 pieces | ± 5 % |

Otherwise, if in the first step the items of the second packaging specification and in the second step the items of the first packaging specification are copied, this leads to a result as given in table 6.

**Table 6**

| resulting packaging specification | |
|---|---|
| package units | tolerances |
| 1 package =10 pieces | |
| 1 carton = 100 pieces | ± 10 % |
| 1 pallet = 1000 pieces | ± 10 % |

In the next step 303 the validity of the resulting packaging specification is validated. The resulting packaging specification is valid, if all necessary items within the resulting packaging specification are not empty and are valid. Therefore, it may be possible that a valid resulting packaging specification is calculated out of the first packaging specification within step 302 even if further packaging specifications are available.

If the resulting packaging specification, which is validated in step 303, is valid, the program flow in this embodiment ends with step 306. In other embodiments, the program flow may continue by copying items from further packaging specifications into the resulting packaging specification even if the resulting packaging specification is valid.

If the resulting packaging specification is not valid, the program flow proceeds with step 304. In step 304 it is checked whether or not further packaging specifications, determined in step 300, are available. If so, the method proceeds with step 305 by copying items from the next packaging specification into the resulting packaging specification according to a set of copying rules. Such rules may be the above mentioned FIFO or LIFO principles. Otherwise, if no further packaging specification is available, the program flow ends with step 306. After step 305, the method returns to step 303 to test the validity of the new resulting packaging specification.

Steps 303, 304, and 305 are repeated until no further packaging specification is available any more, which is checked in step 304, or until the resulting packaging specification is valid, which is checked in step 303.

As a result, the program flow shown in Fig. 4 passes a valid packaging specification to the availability check process 3 shown in Fig. 1.

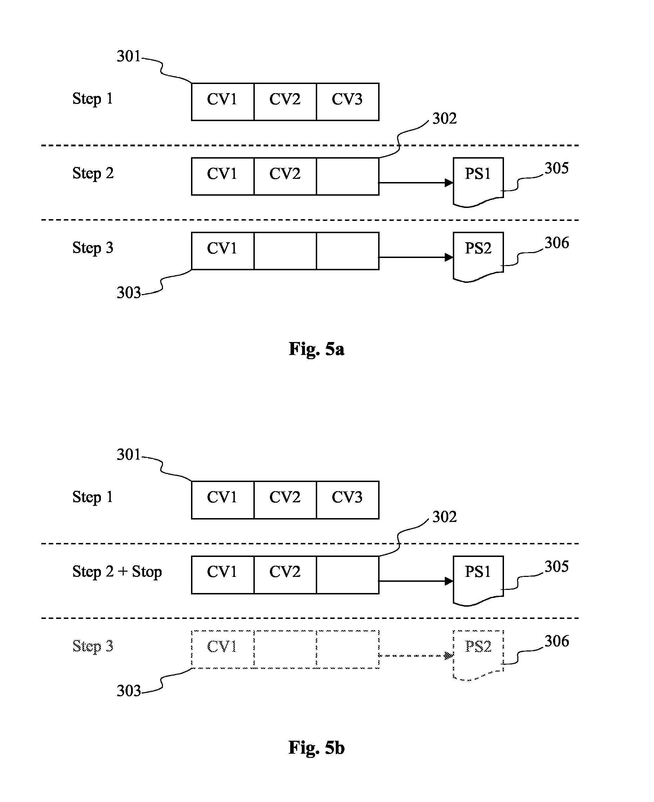

Fig. 5a and 5b show in a exemplary way the method within step 300 of Fig. 4, which determines a packaging specification according to a plurality of access sequences.

Fig. 5a shows the determination of a packaging specification, whereby the determination is performed in a 'non exclusive access mode'. The items 301, 302, 303 are representing a plurality of characteristic values of an access sequence. The item 301 comprises three characteristic values (CV1, CV2, CV3). In a first step (Step 1) of the determination of a packaging specification, the inventive method checks if a packaging specification is maintained according to the characteristic values of item 301. If a packaging specification exists, the method adds this one to a list of determined packaging specifications and continues with the next step (step 2). In this example no packaging specification is maintained according the item 301. In step 2 the method checks if a packaging specification is maintained according to the characteristic values of item 302, whereby the characteristic values of item 302 in one embodiment are a part of the characteristic values of item 301. In this example the packaging specification 305 (PS1) is maintained and will be added to the list of list of determined packaging specifications. Since the method is performed in a 'non exclusive access mode', the method continues with the next step 3. The item 303 comprises a part of the characteristic values of item 302. In this example a packaging specification 306 (PS1) is determined and added to the list of determined packaging specifications.

As a result the list of determined packaging specifications comprises two packaging specification 305 and 306.

Fig. 5b shows the determination of a packaging specification, whereby the determination is performed in a 'exclusive access mode'. The items in Fig. 5b are the same as in Fig. 5a. The difference lies in the access mode. If the method is performed in the 'exclusive access mode', the determining ends when a packaging specification is found. In this example the method ends in step 2 because the packaging specification is found.

As a result the list of determined packaging specifications comprises one packaging specification 305.

The method of determining a packaging specification out of a plurality of packaging specifications may be performed for further access sequences, whereby the list of determined packaging specifications will be expanded if further packaging specifications are determined.

If one access sequence is given by the values (order type / product group) and another one is given by the values (product location / product group) the determination method is performed twice and the list of determined packaging specifications comprises at least two packaging specifications.

The packaging specifications, stored in the list of determined packaging specifications, are used to creating a resulting packaging specification according to the method as described in Fig. 3 and Fig. 4.

The present techniques can be implemented in digital electronic circuitry, or in computer hardware, firmware, software, or in combinations of them. Apparatus of the invention can be implemented in a computer program product tangibly embodied in a machine-readable storage device for execution by a programmable processor. Method steps according to the invention can be performed by a programmable processor executing a program of instructions to perform functions of the invention by operating on the basis of input data, and by generating output data. The invention may be implemented in one or several computer programs that are executable in a programmable system, which includes at least one programmable processor coupled to receive data from, and transmit data to, a storage system, at least one input device, and at least one output device, respectively. Computer programs may be implemented in a high-level or object-oriented programming language, and/or in assembly or machine code. The language or code can be a compiled or interpreted language or code. Processors may include general and special purpose microprocessors. A processor receives instructions and data from memories, in particular from read-only memories and/ or random access memories. A computer may include one or more mass storage devices for storing data; such devices may include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing can be supplemented by or incorporated in ASICs (application-specific integrated circuits).

The computer systems or distributed computer networks as mentioned above may be used, for example, for producing goods, delivering parts for assembling products, controlling technical or economical processes, or implementing telecommunication activities.

To provide for interaction with a user, the invention can be implemented on a computer system having a display device such as a monitor or LCD screen for displaying information to the user and a keyboard and a pointing device such as a mouse or a trackball by which the user can provide input to the computer system.

The computer system can be programmed to provide a graphical or text user interface through which computer programs interact with users.

A computer may include a processor, memory coupled to the processor, a hard drive controller, a video controller and an input/output controller coupled to the processor by a processor bus. The hard drive controller is coupled to a hard disk drive suitable for storing executable computer programs, including programs embodying the present technique. The I/O controller is coupled by means of an I/O bus to an I/O interface. The I/O interface receives and transmits in analogue or digital form over at least one communication link. Such a communication link may be a serial link, a parallel link, local area network, or wireless link (e.g. an RF communication link). A display is coupled to an interface, which is coupled to an I/O bus. A keyboard and pointing device are also coupled to the I/O bus. Alternatively, separate buses may be used for the keyboard pointing device and I/O interface.

Other embodiments are in the scope of the following claims.

## Claims

1. A computer-implemented method for packing products according to a packaging specification, the method comprising
a first step of selecting, based on a plurality of access sequences, at least one packaging specification out of a plurality of packaging specifications;
a second step of performing, according to the plurality of access sequences, a determination of a resulting packaging specification out of the selected at least one packaging specification.

2. The method of claim 1, wherein a packaging specification comprises a plurality of data items which define at least one rounding rule.

3. The method of claim 2, wherein the second step further comprises a sub-step of copying the data items of the at least one packaging specification into the resulting packaging specification according to a set of predetermined rules for copying.

4. The method of claim 3, wherein an access sequence comprises a plurality of characteristic values.

5. The method of claim 4, wherein the first step further comprises
a first sub-step of searching, based on the plurality of characteristic values, a packaging specification out of the plurality of packaging specifications;
a second sub-step of searching, based on a part of the plurality of characteristic values, a packaging specification out of the plurality of packaging specifications, if in the first sub-step no packaging specifications were found; and
a third sub-step of performing the second sub-step, based on a plurality of characteristic values out of the part of the second sub-step, if in the second sub-step no packaging specifications were found.

6. The method of claim 5, wherein the first step is repeated for further pluralities of access sequences until no plurality of access sequences is no longer available.

7. The method of claim 6, wherein the step of copying data items further comprising
copying valid data items from a first selected packaging specification into the resulting packaging specification;
copying valid data items from further selected packaging specifications into the resulting packaging specification according to a set of predetermined rules for copying.

8. The method of claim 7, wherein the set of predetermined rules for copying comprises at least one of the following rules
copying a data item from a packaging specification into the resulting packaging specification, if the corresponding data item in the resulting packaging specification is empty;
copying a data item from a packaging specification into the resulting packaging specification if the corresponding data item in the resulting packaging specification is not empty.

9. An apparatus comprising:
a data storage device which stores a plurality of packaging specifications; means for selecting, based on a plurality of access sequences, at least one packaging specification out of the plurality of packaging specifications; and
means for performing, according to the plurality of access sequences, a determination of a resulting packaging specification out of the selected packaging specifications.

10. The apparatus of claim 9, wherein the means for selecting at least one packaging specification out of a plurality of packaging specifications comprises at least
determining a packaging specification, based on a plurality of characteristic values, out of the plurality of packaging specifications;
determining a packaging specification, based on a part of the plurality of characteristic values, out of the plurality of packaging specifications.

11. The apparatus of claim 10, wherein the means for determining one valid packaging specification out of the at least one packaging specification comprises at least
copying valid data items from a first packaging specification into a resulting packaging specification;
copying valid data items from further packaging specifications into the resulting packaging specification according to a set of predetermined rules for copying.

12. A computer-readable medium comprising computer-executable instructions for performing the method according to one of the claims 1 to 8, when loaded into a computer system.
